# EUROPÄISCHE PATENTANMELDUNG

(11) **EP 2 327 920 A1**
(43) Veröffentlichungstag der Anmeldung: **01.06.2011**
(21) Anmeldenummer: 09405210.7
(22) Anmeldetag: 27.11.2009
(51) Int. Cl.: F16L 59/14, F24J 2/40, F24J 2/46

(54) **Verbindungsrohr für Solaranlage**

(71) Anmelder: Mayr, Andreas, 8640 Rapperswil (CH)
(72) Erfinder: Mayr, Andreas, 8640 Rapperswil (CH); Girola, Andreas, 8330 Pfäffikon (CH)
(74) Vertreter: Müller, Markus Andreas

(57) **Zusammenfassung**

Ein flexibles Verbindungsrohr (10) für eine Solaranlage weist einen Innenschlauch (1) aus hitzebeständigem und im Wesentlichen difussionsdichtem Kunststoff, eine um den Innenschlauch herum angeordnete Metallarmierung (2), und eine um die Metallarmierung herum angeordnete Isolationsschicht (3) auf. Vorzugsweise weist das Verbindungsrohr (10) ferner eine um die Isolationsschicht (3) herum angeordnete Schicht aus einem Geflechtschlauch (5) und ein Signalkabel (4) auf.

## Beschreibung

Die Erfindung bezieht sich auf das Gebiet der Solaranlagen zur Erwärmung von Heiz- und Brauchwarmwasser Sie bezieht sich auf ein Verbindungsrohr für eine Solaranlage, sowie auf eine Solaranlage und auf Verfahren zum Herstellen und Verwenden solcher Verbindungsrohre.

### STAND DER TECHNIK

Eine Solaranlage umfasst typischerweise Sonnenkollektoren zum Erwärmen eines Wärmeträgermediums wie Wasser-Glykolgemisch, sowie Wärmetauscher und Wärmespeicher und Pumpen. Zum Transport des Wärmeträgermediums von und zu den Sonnenkollektoren sowie zwischen den übrigen Komponenten der Anlage ist eine Verrohrung mittels Verbindungsrohren erforderlich, welche einerseits zur Vermeidung von Wärmeverlusten möglichst gut isoliert ist, und andererseits leicht zu verlegen ist. Bestehende Verbindungsrohren basieren auf Rohren aus Kupfer oder Edelstahl, die mit einer Isolation umhüllt sind. Solche Rohre müssen vor/während dem Verlegen in Form gebogen werden und sind wegen ihrer Steifheit schwierig zu verlegen. Solche Rohre reissen (Edelstahl) oder verspröden (Kupfer) nach mehrmaligem Biegen.

### DARSTELLUNG DER ERFINDUNG

Es ist deshalb Aufgabe der Erfindung, ein Verbindungsrohr zur Verrohrung in einer Solaranlage der eingangs genannten Art zu schaffen, welche die oben genannten Nachteile behebt, sowie ein Verfahren zum Herstellen solcher Verbindungsrohre und ein Verfahren zum Verlegen solcher Verbindungsrohre. Eine weitere Aufgabe ist, dass solche Verbindungsrohre langzeitbeständig sind und mehrere Jahre bis Jahrzehnte unter wechselnden klimatischen Bedingungen im Innenbereich und Aussenbereich störungsfrei eingesetzt werden können.

Diese Aufgabe lösen ein Verbindungsrohr zur Verrohrung in einer Solaranlage, sowie die Verfahren mit den Merkmalen der entsprechenden unabhängigen Patentansprüche.

Das Verbindungsrohr für eine Solaranlage, weist also einen Innenschlauch aus hitzebeständigem Kunststoff, eine um den Innenschlauch herum angeordnete Metallarmierung, und eine um die Metallarmierung herum angeordnete Isolationsschicht auf. Die Kombination von Innenschlauch und Metallarmierung wird im Folgenden auch Innenrohr genannt.

Dadurch wird es möglich, eine hitzeresistente und gleichwohl flexible Verrohrung bereitzustellen. Entgegen fachüblichen Vorurteilen sind damit auch langzeitbeständige Rohre realisierbar, beispielsweise indem der Innenschlauch auf Basis eines Fluorkunststoffes wie PFA, FEP, PTFE, PVDF etc. hergestellt ist oder mit einem solchen Material beschichtet. Der Schlauch weist somit eine Grundflexibilität auf, die wesentlich besser ist als jene von Stahl- oder Kupferrohren. Die Metallarmierung verleiht dem Schlauch mechanische Stabilität gegenüber Ausseneinflüssen und Druckbelastungen von innen. Die Metallarmierung ist dabei vorzugsweise ein Geflecht aus Metalldrähten, oder eine Spiralarmierung.

Vorzugsweise weist das Verbindungsrohr eine um die Isolationsschicht herum angeordnete Schicht aus einem Geflechtschlauch aus Kunststofffasern auf. Dieser ist vorzugsweise durch Rotationsflechten um den mit der Isolationsschicht versehenen metallarmierten Kunststoffschlauch hergestellt. Damit ist es möglich, einen flexiblen und mechanisch stabilen Schutz der Isolation zu realisieren und optimale Gleiteigenschaften für das Einziehen der flexiblen Rohrleitungen zu erreichen. Vorzugsweise ist in oder an der Isolationsschicht, und ebenfalls vom Geflechtschlauch umschlossen, längs des Rohres ein oder mehrere Signalkabel angeordnet. Dieses kann in der Solaranlage als Sensor- und/oder Steuerkabel dienen.

Die Isolationsschicht besteht vorzugsweise aus einem in Längsrichtung geschlitzten Rohr aus einem geschlossenporigen Kunststoff, oder aus einem in Umfangsrichtung geschlossenen, also in Längsrichtung nicht geschlitzten, Rohr aus einem geschlossenporigen Kunststoff. Grundsätzlich sind aber auch offenporige Kunststoffe verwendbar. Bei der Herstellung eines Verbindungsrohres gemäss der Erfindung werden beispielsweise Abschnitte der Isolationsschicht auf das Innenrohr durch Öffnen des Längsschlitzes oder durch Durchführen des Innenrohrs durch die Öffnung eines nicht geschlitzten Isolationsrohres aufgesteckt. Damit lassen sich, nach Massgabe der möglichen Längen von Innenrohren, beispielsweise Leitungen von 25 m, 50 m oder noch länger herstellen.

In einer Solaranlage werden die erfindungsgemässen Verbindungsrohre vorzugsweise für den Vorlauf und den Rücklauf des Wärmeträgermediums zu den Solarkollektoren eingesetzt. Dabei liegen separate Verbindungsrohre für Vor- und Rücklauf vor, d.h. dass jedes der Verbindungsrohre seine eigene Isolationsschicht aufweist, und die Verbindungsrohre auch bei einem parallelen Verlauf nebeneinander gut voneinander isoliert sind, was für den Wirkungsgrad der Anlage vorteilhaft ist.

Das Verfahren zum Herstellen von Verbindungsrohren weist also die folgenden Schritte auf
■ Bereitstellen eines mit der Metallarmierung umhüllten Kunststoffschlauches;
■ Aufstecken der Isolationsschicht um den metallarmierten Kunststoffschlauch;
■ Umflechten der Isolationsschicht zur Bildung eines Geflechtschlauches, also beispielsweise mittels Rotationsflechten in einer Schlauchflechtmaschine.

Insbesondere bei einer längs geschlitzten Isolationsschicht wird beim Schritt des Umflechtens der Geflechtschlauch satt mit einer geringen Vorspannung zum Zusammenhalten der Isolationsschicht um die Isolationsschicht geflochten.

Im Verfahren zum Verlegen von Verbindungsrohren wird zunächst ein Futterrohr oder Leerrohr am/im Gebäude verlegt, und anschliessend das Verbindungsrohr in das Futterrohr eingezogen/eingeschoben. Das Verbindungsrohr folgt dabei allfälligen Kurvenverläufen des Futterrohres. Dies ist im Gegensatz zu reinen Metallrohren nur dank der Flexibilität des Verbindungsrohres aufgrund des Kunststoffschlauches möglich.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### WEGE ZUR AUSFÜHRUNG DER ERFINDUNG

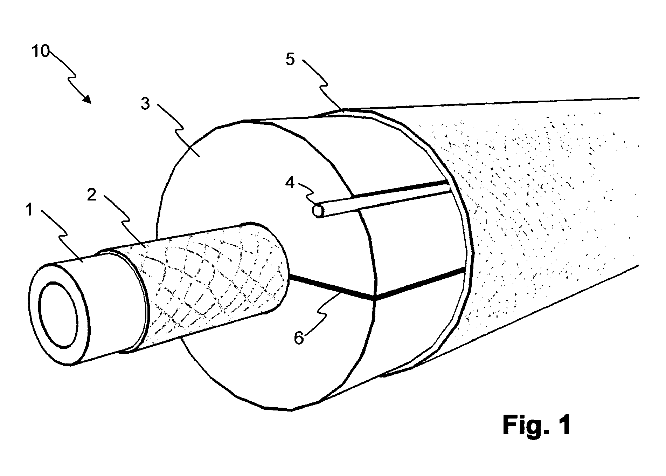

Figur 1 zeigt schematisch einen Querschnitt durch ein Verbindungsrohr 10 in einer bevorzugten Ausführungsform der Erfindung. Das Verbindungsrohr 10 weist, von innen nach aussen, und konzentrisch zueinander angeordnet, einen Innenschlauch 1, eine Metallarmierung 2, eine Isolation 3 und einen Geflechtschlauch 5 auf. Der optionale Geflechtschlauch 5 umhüllt vorzugsweise die Isolation 3 mit einer leichten Vorspannung und umhüllt vorzugsweise auch ein Signalkabel 4. Im gezeigten Beispiel weist die Isolation 3 einen optionalen Längsschlitz 6 auf.

### BEZUGSZEICHENLISTE

- 1: Innenschlauch
- 2: Metallarmierung
- 3: Isolation
- 4: Signalkabel
- 5: Geflechtschlauch
- 6: Längsschlitz
- 10: Verbindungsrohr

## Patentansprüche

1. Verbindungsrohr (10) für eine Solaranlage, aufweisend einen Innenschlauch (1) aus hitzebeständigem und im Wesentlichen diffusionsdichtem Kunststoff, eine um den Innenschlauch herum angeordnete Metallarmierung (2), und eine um die Metallarmierung herum angeordnete Isolationsschicht (3).

2. Verbindungsrohr (10) für eine Solaranlage gemäss Anspruch 1, aufweisend eine um die Isolationsschicht (3) herum angeordnete Schicht aus einem Kunststoff Geflechtschlauch (5).

3. Verbindungsrohr (10) für eine Solaranlage gemäss Anspruch 1 oder 2, wobei der Geflechtschlauch (5) durch Rotationsflechten hergestellt ist.

4. Verbindungsrohr (10) für eine Solaranlage gemäss einem der bisherigen Ansprüche, wobei die Isolationsschicht (3) aus einem in Längsrichtung geschlitzten Rohr aus einem geschlossenporigen Kunststoff besteht.

5. Verbindungsrohr (10) für eine Solaranlage gemäss einem der Ansprüche 1 bis 3, wobei die Isolationsschicht (3) aus einem in Umfangsrichtung geschlossenen Rohr aus einem geschlossenporigen Kunststoff besteht.

6. Verbindungsrohr (10) für eine Solaranlage gemäss einem der bisherigen Ansprüche, wobei das Verbindungsrohr in einer Länge von über 20 m und vorzugsweise über 40 m vorliegt.

7. Verbindungsrohr (10) für eine Solaranlage gemäss einem der bisherigen Ansprüche, wobei der Innenschlauch (1) auf Basis eines hitzebeständigen und vorzugsweise im wesentlichen diffusionsdichtem Kunststoffes hergestellt oder mit einem solchen Werkstoff beschichtet ist.

8. Verbindungsrohr (10) für eine Solaranlage gemäss einem der bisherigen Ansprüche, aufweisend ein oder mehrere innerhalb des Geflechtschlauches (5) in Längsrichtung des Verbindungsrohres (10) verlaufende Signalkabel (4).

9. Solaranlage, aufweisend Verbindungsrohre (10) gemäss einem der bisherigen Ansprüche.

10. Verfahren zum Herstellen von Verbindungsrohren (10) gemäss einem der Ansprüche 2 bis 8, aufweisend die Schritte
■ Bereitstellen eines mit der Metallarmierung (2) umhüllten Kunststoffschlauches (1);
■ Aufstecken der Isolationsschicht (3) um den metallarmierten (2) Kunststoffschlauch (1);
■ optionales Anlegen eines oder mehrer Signalkabel (4) an oder in die Isolationsschicht (3);
■ Umflechten der Isolationsschicht (3) mittels Rotationsflechtverfahren zur Bildung eines vorzugsweise satt anliegenden Geflechtschlauches (5).

11. Verfahren zum Herstellen von Verbindungsrohren (10) gemäss Anspruch 10, wobei der Schritt des Aufsteckens der Isolationsschicht (3) mit einer längs geschlitzten Isolationsschicht (3) ausgeführt wird, und beim Schritt des Umflechtens der Geflechtschlauch (5) mit einer leichten Vorspannung zum Zusammenhalten der Isolationsschicht (3) um die Isolationsschicht (3) geflochten wird.

12. Verfahren zum Verlegen von Verbindungsrohren (10) für eine Solaranlage gemäss einem der Ansprüche 1 bis 8, **dadurch gekennzeichnet, dass** zunächst ein Futterrohr verlegt wird, und anschliessend ein Verbindungsrohr (10) in das Futterrohr eingezogen oder eingeschoben wird.
